# EUROPEAN PATENT SPECIFICATION

(11) **EP 3 421 571 B1**
(45) Date of publication and mention of the grant of the patent: **04.08.2021**
(21) Application number: 17756688.2
(22) Date of filing: 27.02.2017
(51) Int. Cl.: C10B 29/02, C04B 35/66, F27D 1/00, C04B 103/14, C04B 111/10

(54) **PRECAST REFRACTORY BLOCK FOR COKE OVEN**
FEUERFESTER FERTIGBLOCK FÜR KOKSOFEN
BLOC RÉFRACTAIRE PRÉFABRIQUÉ POUR FOUR À COKE

(30) Priority: 25.02.2016 JP 2016034662
(43) Date of publication of application: 02.01.2019
(73) Proprietor: Nippon Steel Corporation, Tokyo (JP); Krosakiharima Corporation, Kitakyushu-shi Fukuoka 806-8586 (JP)
(72) Inventor: TERASHIMA, Hidetoshi, Tokyo 100-8071 (JP); TSUTSUI, Yasushi, Tokyo 100-8071 (JP); TAKEMOTO, Hironao, Kitakyushu-shi Fukuoka 806-8586 (JP); MATSUI, Taijirou, Kitakyushu-shi Fukuoka 806-8586 (JP); MATSUNAGA, Takashi, Kitakyushu-shi Fukuoka 806-8586 (JP); KITAZAWA, Yutaka, Kitakyushu-shi Fukuoka 806-8586 (JP)
(74) Representative: Vossius & Partner Patentanwälte Rechtsanwälte mbB
(86) International application number: PCT/JP2017/007453
(87) International publication number: WO 2017/146254

(56) References cited:
- CN-A- 101 323 530
- JP-A- S5 026 810
- JP-A- S5 855 368
- JP-A- 2013 189 322
- JP-A- 2013 234 092
- US-A- 5 885 913

## Description

### TECHNICAL FIELD

The present invention relates to a precast refractory block (precast block of a refractory material) suitably used in a coke oven.

### BACKGROUND ART

Heretofore, a coke oven has been used after being lined with a silica brick. However, in the case of employing a silica brick, the lining has to be constructed using a large number of silica bricks. Thus, there was a problem of requiring time for the construction. For this reason, in recent years, repair/construction, particularly hot repair/construction, of a lining of a coke oven has been implemented using a silica-based precast refractory block which is easy to be formed in a large size as compared to the silica block.

Such a precast refractory block requires hot properties as a structural body. Particularly in a coke oven, the precast refractory block requires stabilization of an under-load expansion behavior and an under-load shrinkage behavior (hereinafter referred to collectively as "under-load expansion/shrinkage behavior") at high temperatures, in addition to hot strength. If the under-load expansion/shrinkage behavior at high temperatures is not stable (If the precast refractory block has a large deformation due to under-load expansion and under-load shrinkage at high temperatures), resistance during push-out of coke increases, leading to a hindrance to the push-out operation, and a possibility of breakage of the precast refractory block itself.

In the following Patent Document 1, there is described a technique relating to a refractory composition comprising: fused silica as a primary raw material, and Portland cement as a binder. However, when, in a precast refractory block for a coke oven, Portland cement is contained as a binder in a large amount (e.g., in 2 to 10 weight%, with respect to the primary raw material), there is a problem that the precast refractory block largely shrinks under a load at high temperatures, due to hydration reaction of Portland cement.

In the following Patent Document 2, colloidal silica and silicate soda are used as a binder (hardening agent), in place of heretofore commonly-used alumina cement, so as to suppress under-load shrinkage at high temperatures. However, the use of colloidal silica and silicate soda involves a problem of deterioration in hot strength. Patent Document 3 discloses a prefabricated part made of vitreous fused silica for use in repairing coke ovens. Patent Document 4 discloses a fused quartz block for hot repair of coke ovens. Patent Document 5 discloses a casting refractory material.

### CITATION LIST

### [PARENT DOCUMENT]

Patent Document 1: JP S56-078476A
Patent Document 2: JP 2013-189322A
Patent Document 3: US 5,885,913 A
Patent Document 4: CN 101323530 A
Patent Document 5: JP 2013-234092 A

### SUMMARY OF INVENTION

### [TECHNICAL PROBLEM]

A technical problem to be addressed by the present invention is to provide a precast refractory block for a coke oven, having high hot strength and exhibiting a stable under-load expansion/shrinkage behavior at high temperatures.

### [Solution to Technical Problem]

The inventors diligently conducted studies for addressing the above technical problem. For example, when using cement as a binder in a large amount, the under-load shrinkage behavior at high temperatures could not be stabilized due to hydration reaction by cement, as described in the Patent Document 1. On the other hand, when using colloidal silica and silicate soda as a binder, the hot strength deteriorated. In these circumstances, the inventors have found that, in a silica-based precast refractory block for a coke oven, it is possible to stably control the under-load expansion/shrinkage behavior at high temperatures while maintaining high hot strength, by using a P₂O₅ component as a binder component, instead of using, as a binder, a large amount of cement or colloidal silica and silicate soda.

Specifically, the present invention provides a silica-based precast refractory block for a coke oven, which contains a P₂O₅ component in an amount of 0.3 to 2.0 mass%.

### [EFFECT OF THE INVENTION]

The present invention makes it possible to obtain a precast refractory block for a coke oven, which exhibits high hot strength and a stable under-load expansion/shrinkage behavior at high temperatures.

### BRIEF DESCRIPTION OF THE DRAWINGS

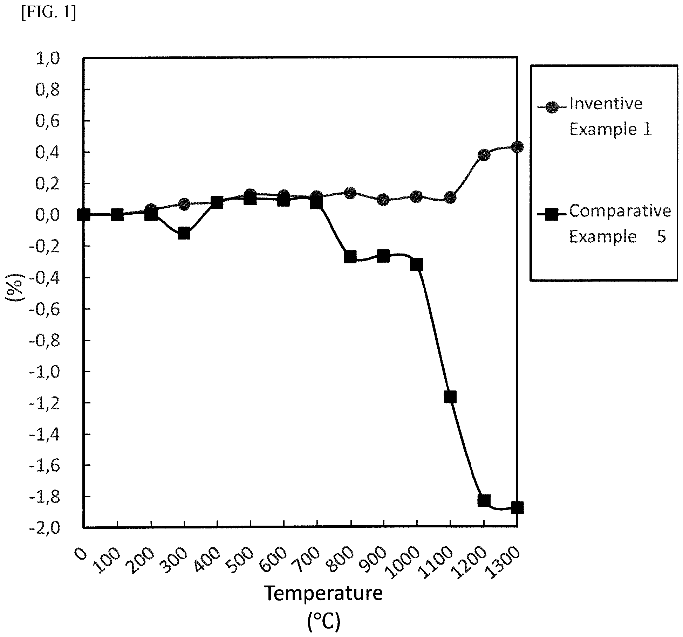

FIG. 1 is a graph presenting under-load expansion/shrinkage behaviors in Inventive Example 1 and Comparative Example 5.

### DESCRIPTION OF EMBODIMENTS

A precast refractory block for a coke oven (coke oven precast refractory block) of the present invention is a silica-based precast refractory block, i.e., a precast refractory block comprising a primary component consisting of a SiO₂ component as defined in the claims. Although a specific content of the SiO₂ component falls within a range of common technical knowledge of a person of ordinary skill in the art, it is preferably set in the range of 65 to 99 mass%, more preferably in the range of 80 to 99 mass%.

As a SiO₂ component source, it is possible to use any of various silica-based raw materials, such as fused silica, silica stone (calcined silica, non-calcined silica, etc.), and fumed silica. In the present invention, the amount of fused silica in a raw material composition is 65 mass% or more, preferably 72 mass% or more. Further, the amount of silica stone is 17 mass% or less, and the amount of fumed silica is in the range of 0.5 to 15 mass%. Particularly, from a viewpoint that shrinkage due to dehydration during drying can be canceled out, the amount of fused silica is 65 mass% or more, and the amount of silica stone is 17 mass% or less. In this case, the amount of silica stone may be 0 mass%. Further, from a viewpoint of maintaining high hot strength, the amount of fumed silica is in the range of 0.5 to 15 mass%. As regards a particle size of the silica-based raw material, in view of filling performance and work efficiency, an aggregate having a top size of 5 mm and submicron particles are preferably used in combination. In addition, in order to further stabilize thermal expansion rate/shrinkage rate under a load (hereinafter referred to as "under-load expansion/shrinkage rate"), the amount of coarse particles having a particle size of 1 mm or more is preferably 25 mass% or more. Here, an alumina-based raw material can also be used in combination, as a primary aggregate other than silica-based raw material. As the alumina-based raw material, it is possible to use fused alumina, sintered alumina, or the like. However, when the content of the SiO₂ component becomes less than 65 mass%, the hot strength deteriorates. Thus, it is undesirable to add the alumina-based raw material in a large amount.

In the coke oven precast refractory block of the present invention, while the P₂O₅ component functions as a binder component as described above, the content thereof is set in the range of 0.3 to 2.0 mass%. If the content of the P₂O₅ component is less than 0.3 mass%, a bonding function thereof as a binder component is not brought out. On the other hand, if the P₂O₅ component exceeds 2.0 mass%, a low melting point substance (SiO₂ - P₂O₅ based substance) is excessively formed, so that deformation due to under-load shrinkage at high temperatures becomes large.

As a P₂O₅ component source, it is possible to use phosphate. In this case, from a viewpoint of suppressing formation of the low melting point substance, Na₂O component and K₂O component contained as impurities in phosphate are preferably contained in a total amount of 0.5 mass% or less, with respect to 100 mass% of the precast refractory block.

In the raw material composition for the coke oven precast refractory block of the present invention, from a viewpoint of increasing strength during curing, the amount of hardening accelerator is preferably 0.05 mass% or more. Further, from a viewpoint of maintaining high hot strength, it is preferably 1.9 mass% or less. Examples of the hardening accelerator include a fine powder of magnesia, and slaked lime.

Preferably, the coke oven precast refractory block of the present invention is free of cement. If it contains cement, under-load shrinkage occurs due to hydration reaction of the cement. On the other hand, when it is free of cement, it is possible to suppress such under-load shrinkage.

The coke oven precast refractory block of the present invention can be obtained by a conventional precast refractory block production method comprising: mixing together the aforementioned silica-based raw material (SiO₂ component source) as a primary raw material, sodium phosphate (P₂O₅ component source) as a binder, and optionally an organic fiber, a dispersant, a hardening accelerator, a hardening retarder, a sintering aid, etc. as other additives; adding an appropriate amount (e.g., 5 mass% to 7 mass%) of casting water; and subjecting the obtained mixture to kneading, shaping, curing, demolding and drying.

### [EXAMPLES]

In accordance with a raw material composition of Table 1, raw materials were mixed together, and after casting water in an amount of 6.5 mass% was added to the raw material mixture, they were subjected to kneading, shaping, curing, demolding and drying. By using the obtained test samples of precast refractory block for a coke oven, under-load expansion/shrinkage behavior and hot strength were measured to perform a comprehensive evaluation. The obtained test samples were also subjected to analysis for chemical composition. Here, fused silica, calcined silica, non-calcined silica, and fused alumina each having a particle size of 1 to 5 mm and a particle size of less than 1 mm mixed at a ratio of 6: 4, were used. In addition, fumed silica having an average particle diameter of 0.5 µm was used. For each of the chemical components of raw materials, fused silica containing a SiO₂ component in an amount of 99.7 mass%, calcined silica containing a SiO₂ component in an amount of 99.5 mass%, non-calcined silica containing a SiO₂ component in an amount of 99.7 mass%, fumed silica containing a SiO₂ component in an amount of 96 mass% and a Na₂O component in an amount of 0.2 mass%, fused alumina containing Al₂O₃ in an amount of 100 mass%, sodium phosphate containing a P₂O₅ component in an amount of 65 mass% and a Na₂O component in an amount of 23 mass%, silicate soda containing a SiO₂ component in an amount of 65 mass% and a Na₂O component in an amount of 22 mass%, colloidal silica containing a SiO₂ component in an amount of 40 mass%, Portland cement containing a SiO₂ component in an amount of 24 mass%, fine powders of magnesia containing a MgO component in an amount of 100 mass%, and slaked lime containing CaO in an amount of 100 mass%, were used.

An under-load expansion/shrinkage behavior was measured under a load of 0.2 MPa according to JIS-R2207-2 in a temperature range from room temperature to 1300 °C. When the under-load expansion/shrinkage rate was in the range of -0.1% or more to less than 0.5%, the sample was evaluated as Excellent (⊚); when it was in the range of -0.3% or more to less than -0.1%, or in the range of +0.5% or more to less +0.7%, the sample was evaluated as Good (○); when it was in the range of -0.5% or more to less than -0.3% or in the range of +0.7% or more to less than +0.8%, the sample was evaluated as Acceptable (Δ); when it was less than -0.5% or equal or more than +0.8%, the sample was evaluated as NG (×); and when the evaluation was Acceptable (Δ) or better, the sample was evaluated as Pass. Here, the sign - (minus) denotes the under-load shrinkage behavior, and the sign + (plus) denotes the under-load expansion behavior.

A hot bending strength was measured according to JIS-R2213 at 1000 °C. In order to set the test samples to the measurement temperature, they were held in a furnace for 1 hour, and then the hot bending strength was measured. When the hot bending strength was 10 MPa or more, the sample was evaluated as Excellent (⊚); when it was 5 MPa or more and less than 10 MPa, the sample was evaluated as Good (○); when it was 3 MPa or more and less than 5 MPa, the sample was evaluated as Acceptable (Δ); when it was less than 3 MPa, the sample was evaluated as NG (×); and when the evaluation was Acceptable (Δ) or better, the sample was evaluated as Pass.

And the comprehensive evaluation was determined as:
Excellent (⊚) when the sample has two Excellent (⊚) in the above two evaluations;
Good (○) when the sample has one Excellent (⊚) and one Good (○);
Acceptable (Δ) when the sample has one Excellent (⊚) or one Good (○) and one Acceptable (Δ);
NG (×) when the sample has at least one NG (×); and
when the comprehensive evaluation was Acceptable (Δ) or better, the sample was evaluated as Pass.

Table 1 presents results of these evaluations together.

TABLE 1

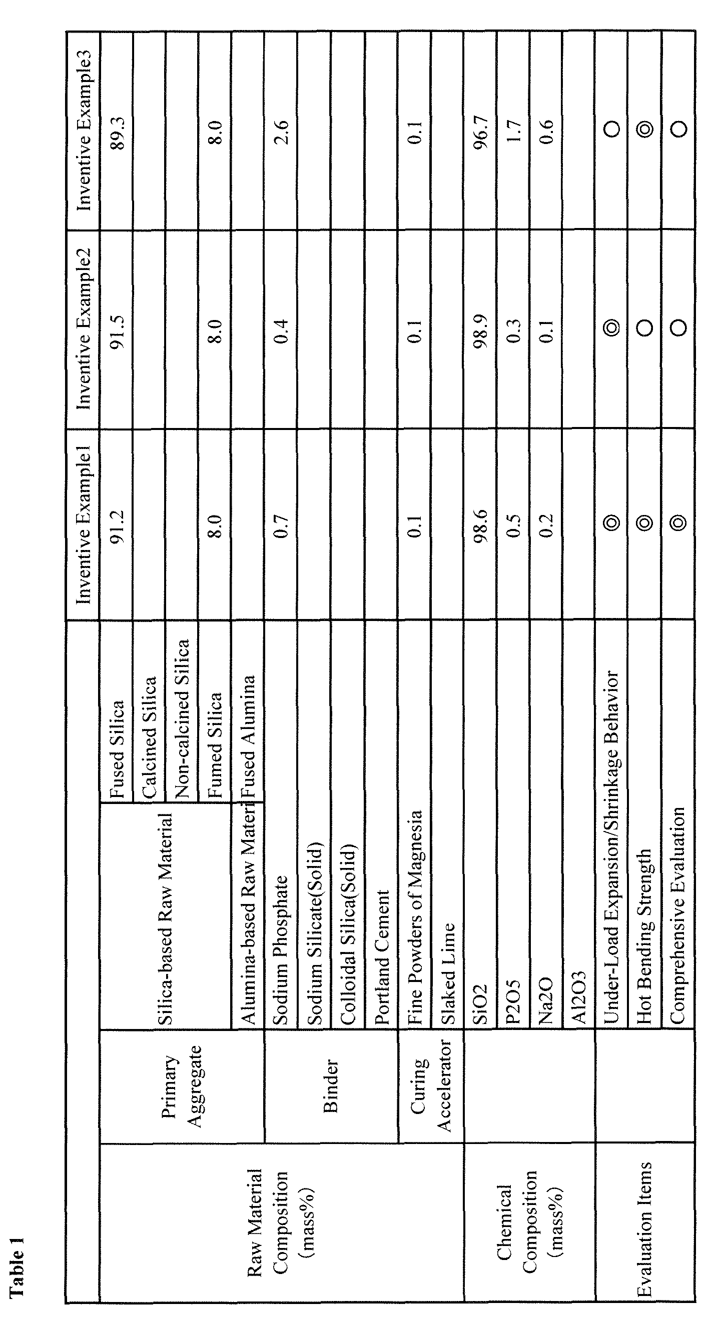

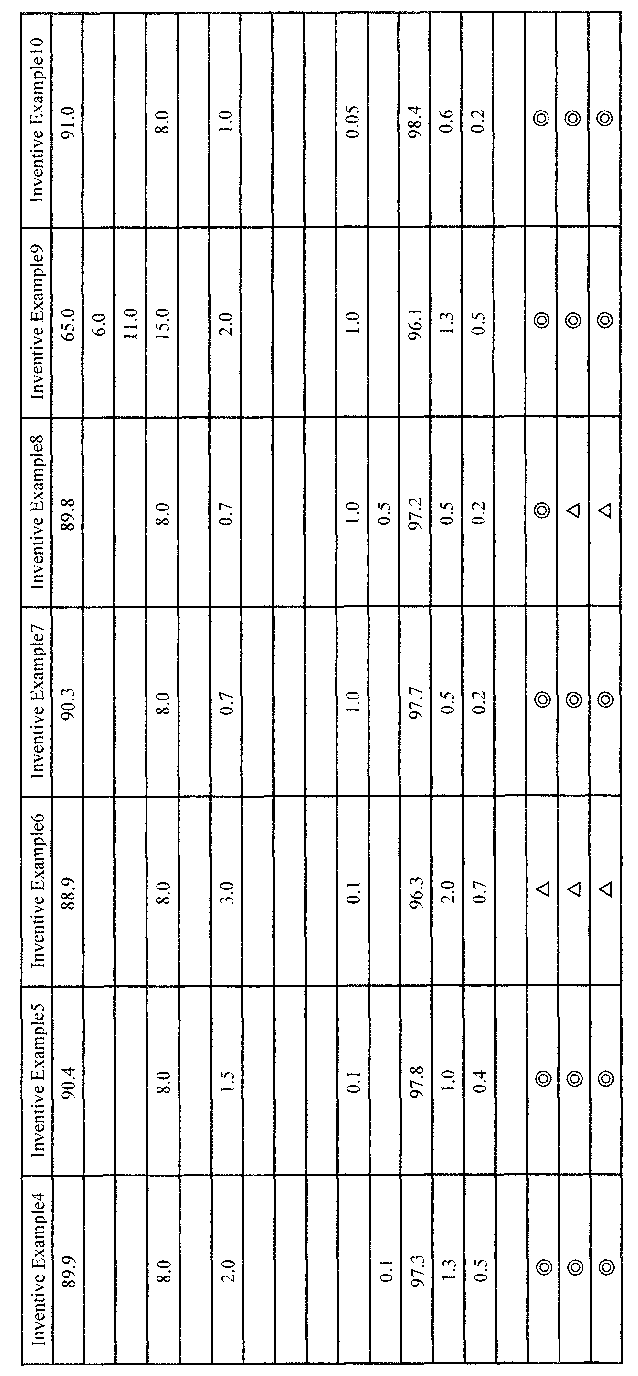

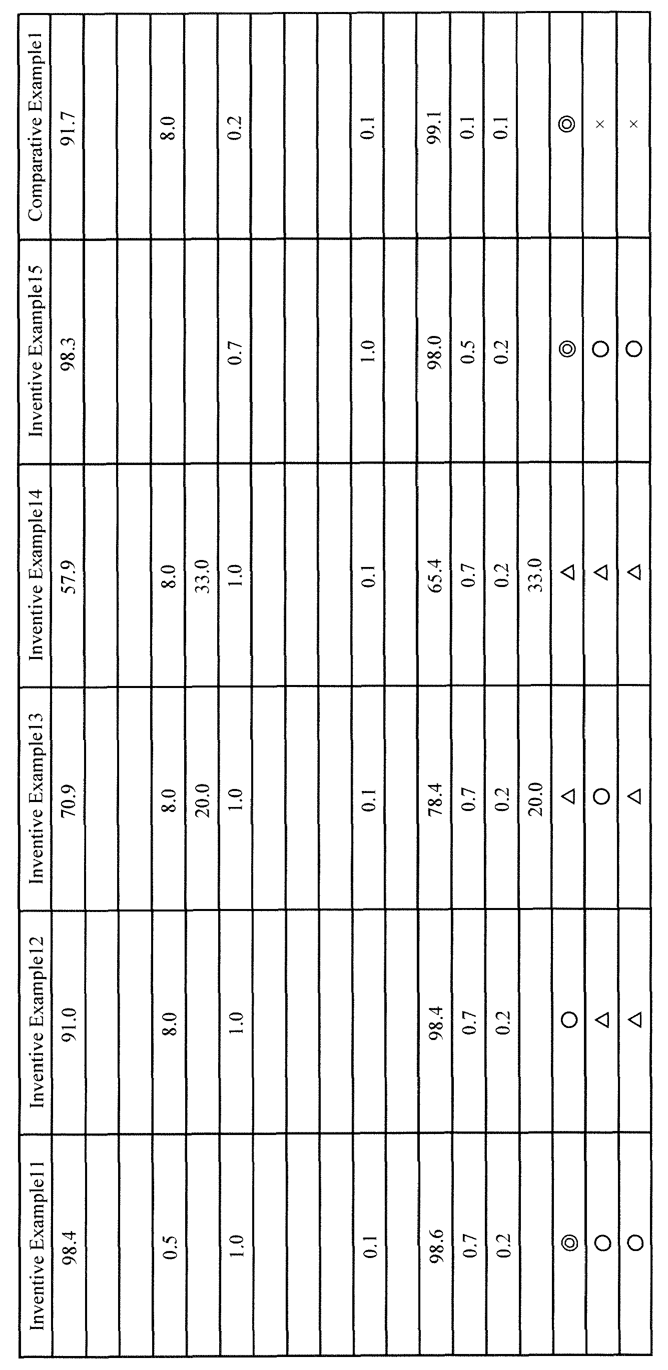

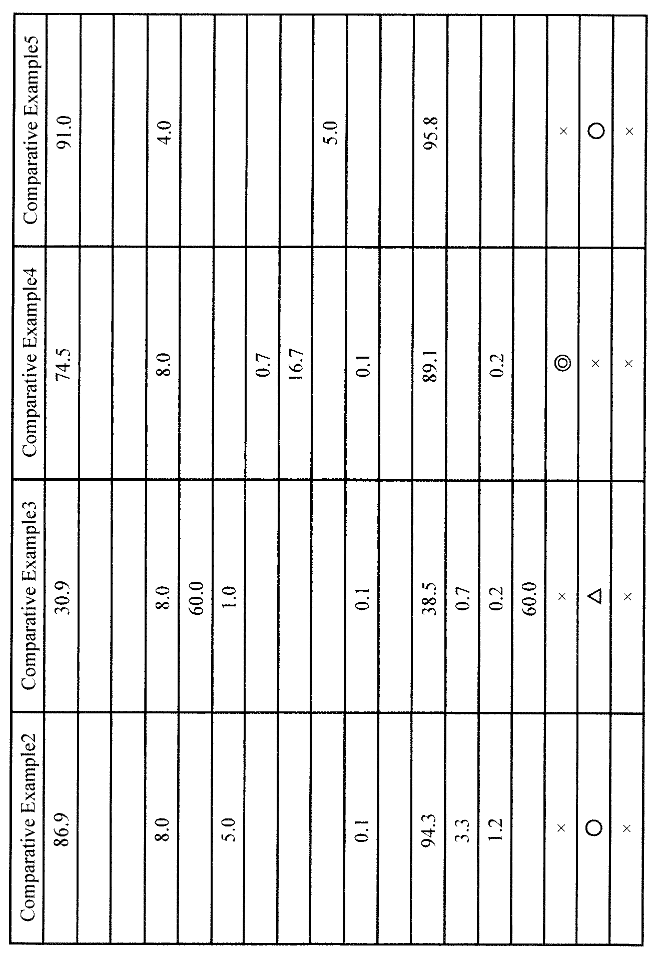

In TABLE 1, all of Inventive Examples 1 to 15 are a precast refractory block for a coke oven, which fall within the scope of the present invention. The comprehensive evaluations thereof were Acceptable (Δ) or better, and both the under-load expansion/shrinkage behavior and the hot bending strength were acceptable level or better.

Comparative Example 1 is an example in which the content of the P₂O₅ component is low. In Comparative Example 1, the bond function was not sufficiently obtained and the hot bending strength did not reach the acceptance level. On the other hand, Comparative Example 2 is an example in which the content of the P₂O₅ component is high. In Comparative Example 2, the under-load expansion/shrinkage behavior did not reach the acceptance level because of excessive generation of a low melting point substance (SiO₂ - P₂O₅).

Comparative Example 3 is an example in which P₂O₅ component is applied as a binder component in a precast refractory block for a coke oven whose primary component is Al₂O₃ component. In Comparative Example 3, the under-load expansion/shrinkage behavior did not reach the acceptance level.

Comparative Example 4 is corresponding to the above Patent Document 1, and an example in which colloidal silica and silicate soda are applied as a binder. In Comparative Example 4, the hot bending strength did not reach the acceptance level.

Comparative Example 5 is an example in which only Portland cement is used as a binder. In Comparative Example 5, the under-load expansion/shrinkage behavior did not reach the acceptance level.

FIG. 1 is a graph presenting the under-load expansion/shrinkage behavior from room temperature to 1300 °C for Inventive Example 1 and Comparative Example 5. In Inventive Example 1 which falls within the scope of the present invention and in which phosphate (P₂O₅ component source) as a binder was mixed, the under-load expansion/shrinkage behavior was stable, whereas in Comparative Example 5 in which a large amount (5 mass%) of Portland cement as a binder was mixed, the shrinkage under load occurred markedly from the vicinity of 1,000 °C.

## Claims

1. A silica-based precast refractory block for a coke oven, the precast refractory block containing a P₂O₅ component in an amount of 0.3 to 2 mass%, wherein, in a raw material mixture of the precast refractory block, fused silica is mixed in an amount of 65 mass% or more, silica stone is mixed in an amount of 17 mass% or less, and fumed silica is mixed in an amount of 0.5 to 15 mass%.

2. The precast refractory block as recited in claim 1, which contains a SiO₂ component in an amount of 65 to 99 mass%.

3. The precast refractory block as recited in claim 1, which contains a SiO₂ component in an amount of 80 to 99 mass%.

4. The precast refractory block as recited in any one of claims 1 to 3, wherein, in the raw material mixture, a hardening accelerator is mixed in an amount of 0.05 to 1.9 mass%.

5. The precast refractory block as recited in any one of claims 1 to 4, which is free of cement as a binder.

## Patentansprüche

1. Ein feuerfester Fertigblock auf Siliziumdioxidbasis für einen Koksofen, wobei der feuerfeste Fertigblock eine P₂O₅-Komponente in einer Menge von 0,3 bis 2 Massen-% enthält, wobei in einem Rohmaterialgemisch des feuerfesten Fertigblocks Quarzglas in einer Menge von 65 Massen-% oder mehr, Silikastein in einer Menge von 17 Massen-% oder weniger und pyrogenes Siliziumdioxid in einer Menge von 0,5 bis 15 Massen-% beigemischt ist.

2. Der feuerfeste Fertigblock nach Anspruch 1, der eine SiO₂-Komponente in einer Menge von 65 bis 99 Massen-% enthält.

3. Der feuerfeste Fertigblock nach Anspruch 1, der eine SiO₂-Komponente in einer Menge von 80 bis 99 Massen-% enthält.

4. Der feuerfeste Fertigblock nach einem der Ansprüche 1 bis 3, wobei in dem Rohmaterialgemisch ein Härtungsbeschleuniger in einer Menge von 0,05 bis 1,9 Massen-% beigemischt ist.

5. Der feuerfeste Fertigblock nach einem der Ansprüche 1 bis 4, der frei von Zement als Bindemittel ist.

## Revendications

1. Bloc réfractaire préfabriqué à base de silice pour un four à coke, le bloc réfractaire préfabriqué contenant un composant P₂O₅ en une quantité de 0,3 à 2 % en masse, dans lequel, dans un mélange de matières premières du bloc réfractaire préfabriqué, de la silice fondue est mélangée en une quantité de 65 % en masse ou plus, de la pierre de silice est mélangée en une quantité de 17 % en masse ou moins, et de la silice fumée est mélangée en une quantité de 0,5 à 15 % en masse.

2. Bloc réfractaire préfabriqué selon la revendication 1, qui contient un composant SiO₂ en une quantité de 65 à 99 % en masse.

3. Bloc réfractaire préfabriqué selon la revendication 1, qui contient un composant SiO₂ en une quantité de 80 à 99 % en masse.

4. Bloc réfractaire préfabriqué selon l'une quelconque des revendications 1 à 3, dans lequel, dans le mélange de matières premières, un accélérateur de durcissement est mélangé en une quantité de 0,05 à 1,9 % en masse.

5. Bloc réfractaire préfabriqué selon l'une quelconque des revendications 1 à 4, qui est exempt de ciment en tant que liant.
